# EUROPÄISCHE PATENTSCHRIFT

(11) **EP 1 894 736 B1**
(45) Veröffentlichungstag und Bekanntmachung des Hinweises auf die Patenterteilung: **21.06.2017**
(21) Anmeldenummer: 07016548.5
(22) Anmeldetag: 23.08.2007
(51) Int. Cl.: B41M 3/14, B42D 25/00, C09K 19/02

(54) **Sicherheitselement mit farbkippender Motivschicht und Verfahren zu dessen Herstellung**
Security element with a color-shift effect and method for producing said security element
Elément de sécurité à effet chatoyant et procédé de fabrication dudit élément

(30) Priorität: 28.08.2006 DE 102006040227
(43) Veröffentlichungstag der Anmeldung: 05.03.2008
(73) Patentinhaber: Giesecke & Devrient GmbH, 81677 München (DE)
(72) Erfinder: Hoffmüller, Winfried, Dr., 83646 Bad Tölz (DE)
(74) Vertreter: Zeuner Summerer Stütz

(56) Entgegenhaltungen:
- DE-A1-102004 021 246
- DE-A1-102004 053 008

## Beschreibung

Die Erfindung betrifft ein Verfahren zum Herstellen eines Sicherheitselements mit farbkippender Motivschicht für Sicherheitspapiere, Wertdokumente und dergleichen.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Vielfach werden für diesen Zweck die besonderen Eigenschaften von flüssigkristallinen Materialien ausgenutzt, und dabei vor allem der betrachtungswinkelabhängige Farbeindruck und die lichtpolarisierende Wirkung der Flüssigkristalle.

Besonders die Erzeugung von mehrfarbigen farbkippenden Motiven, also von Motiven, deren Motivbereiche unterschiedliche Farbkippeffekte aufweisen, ist derzeit allerdings noch mit praktischen Schwierigkeiten verbunden. Beispielsweise beschreibt die Druckschrift EP 0 911 758 A2 ein Identifikationsmedium mit einer Schicht aus cholesterischem Flüssigkristallpolymer. Nach einem Ausführungsbeispiel sind cholesterische Flüssigkristalle unterschiedlicher Arten, beispielsweise mit einer Reflexion in unterschiedlichen Wellenlängenbereichen, übereinander bzw. einander überlappend angeordnet. Das reflektierte Licht stellt dann eine Kombination des von den einzelnen Schichten reflektierten Lichts dar. Farbkippende Motivschichten mit Motivbereichen mit definierten, unterschiedlichen Farbkippeffekten können auf diese Weise allerdings nur sehr begrenzt realisiert werden.

Bei einem anderen Ansatz werden cholesterische Flüssigkristallschichten mit unterschiedlichen nebeneinanderliegenden Farbkippeffekten durch eine gezielte Temperatureinwirkung und die daraus resultierende lokale Änderung der Ganghöhe der helikalen Struktur hergestellt. Die gleiche Wirkung kann durch eine nachträgliche lokale Veränderung der Verdrillerkonzentration des cholesterischen Materials durch gezielte Photoisomerisierung eines photoisomerisierbaren Verdrillers erzielt werden.

Die Druckschrift EP 1 295 929 A2 beschreibt beispielsweise eine anisotrope Polymerfolie, die ein polymerisiertes chirales flüssigkristallines Material mit einer Helixstruktur aufweist. Das flüssigkristalline Material enthält wenigstens zwei photoisomerisierbare chirale Komponenten mit unterschiedlichem Drehsinn, von denen eine chirale Komponente mittels Strahlung in einen Zustand mit unterschiedlicher Ganghöhe konvertiert werden kann.

Durch eine lokale Temperatureinwirkung können allerdings derzeit nur vergleichsweise unscharfe Motivbilder erzeugt werden. Die lokale Veränderung der Verdrillerkonzentration durch Photoisomerisierung erfordert eine gezielte lokale Belichtung mit UV-Strahlung, was insbesondere in einem Rolle-zu-Rolle-Prozess nur schwer zu realisieren ist.

Die Druckschrift DE 10 2004 021 246 A1 betrifft ein Sicherheitselement zur Absicherung von Wertgegenständen mit einer zumindest bereichsweise vorliegenden ersten lichtpolarisierenden Schicht aus einem cholesterischen flüssigkristallinen Material. Weiter ist eine zumindest bereichsweise vorliegende zweite lichtpolarisierende Schicht vorgesehen, wobei die erste und die zweite Schicht in einem Überlappungsbereich übereinander angeordnet sind. Die erste lichtpolarisierende Schicht reflektiert dabei selektiv Licht in einem ersten Wellenlängenbereich mit einer ersten zirkularen Polarisationsrichtung, und die zweite lichtpolarisierende Schicht reflektiert entweder selbst oder im Überlappungsbereich in Zusammenwirkung mit der ersten lichtpolarisierenden Schicht selektiv Licht in einem zweiten Wellenlängenbereich mit einer zweiten zirkularen Polarisationsrichtung.

Ausgehend davon liegt der Erfindung die Aufgabe zugrunde, ein Verfahren der eingangs genannten Art anzugeben, das die Nachteile des Stands der Technik vermeidet oder zumindest reduziert. Insbesondere soll ein einfaches Verfahren zur Herstellung eines Sicherheitselements mit farbkippender Motivschicht angegeben werden, das mehrere nebeneinanderliegende unterschiedliche Farbkippeffekte ermöglicht.

Diese Aufgabe wird durch das Verfahren mit den Merkmalen des Hauptanspruchs gelöst. Ein entsprechendes Sicherheitselement, ein Sicherheitspapier sowie ein Wertdokument sind in den nebengeordneten Ansprüchen angegeben. Weiterbildungen der Erfindung sind Gegenstand der Unteransprüche.

Gemäß der Erfindung wird bei einem gattungsgemäßen Verfahren
a) auf einen Träger eine erste Schicht aus einem nicht-chiralen flüssigkristallinen Material aufgebracht,
b) die erste Schicht nur unvollständig vernetzt,
c) eine zweite Schicht aus einem chiralen flüssigkristallinen Material mit einem Farbkippeffekt auf die nur unvollständig vernetzte erste Schicht aufgebracht, und
d) die zweite Schicht unvollständig oder vollständig vernetzt.

Bei der unvollständigen Vernetzung weist die jeweilige Schicht einen ersten niedrigen Vernetzungsgrad auf. Bei der vollständigen Vernetzung weist die jeweilige Schicht einen zweiten hohen Vernetzungsgrad auf. Die absoluten Werte hängen dabei stark vom verwendeten Material ab.

Wie nachfolgend genauer erläutert, erlaubt die unvollständige Vernetzung der ersten nicht-chiralen Flüssigkristallschicht eine unerwartete Wechselwirkung mit der anschließend aufgebrachten chiralen Flüssigkristallschicht, die scharf begrenzte, lokale Änderungen deren farbkippender Eigenschaften ermöglicht.

Vorzugsweise wird in Schritt a) eine Schicht aus einem nematischen flüssigkristallinen Material aufgebracht. Bevorzugt wird die erste Schicht dabei in Form eines ersten Motivs aufgebracht, wobei das erste Motiv insbesondere durch Bereiche unterschiedlicher Schichtdicke des nicht-chiralen flüssigkristallinen Materials gebildet wird.

In Schritt c) wird mit Vorteil eine Schicht aus einem cholesterischen flüssigkristallinen Material aufgebracht. Das cholesterische flüssigkristalline Material wird dabei zweckmäßig durch Kombination eines nematischen Flüssigkristallsystems mit einem Verdriller gebildet. Da ein Motiv bereits durch die Wechselwirkung einer strukturiert aufgebrachten ersten Schicht mit der zweiten Schicht entsteht, wird die zweite Schicht in Schritt c) zweckmäßig vollflächig aufgebracht.

Die Vernetzung in Schritt b) wird mit Vorteil so stark ausgeführt, dass die erste Schicht danach tackfrei und wickelbar ist, die erste Schicht aber noch nicht vollständig polymerisiert ist. Auch die zweite Schicht kann in Schritt d) nur so unvollständig vernetzt werden, dass sie tackfrei und wickelbar ist. Ihre farbkippenden Eigenschaften können dann durch Aufbringen eines lösungsmittelhaltigen Beschichtungsmittels noch modifiziert werden, wie weiter unten erläutert.

Die unvollständige Vernetzung der ersten und/oder zweiten Schicht wird insbesondere durch Vernetzung bei einer niedrigen Temperatur, insbesondere bei einer Temperatur von 30 °C oder weniger, beispielsweise bei einer Temperatur von etwa 20 °C erreicht.

Mit Vorteil werden die erste und/ oder zweite Schicht in einem späteren Verfahrensschritt e) vollständig vernetzt. Die vollständige Vernetzung der ersten und/oder zweiten Schicht wird dabei durch Vernetzung bei einer erhöhten Temperatur, bevorzugt bei einer Temperatur oberhalb von 30 °C, besonders bevorzugt oberhalb von 50 °C erreicht.

Gemäß einer Weiterbildung des Verfahrens wird in Schritt a) zunächst zumindest eine weitere Schicht aus einem flüssigkristallinen Material auf den Träger aufgebracht, die zumindest eine weitere Schicht vollständig vernetzt und dann die erste Schicht auf die vollständig vernetzte, zumindest eine weitere Schicht aufgebracht. Als zumindest eine weitere Schicht wird dabei vorzugsweise eine Schicht eines nematischen flüssigkristallinen Materials aufgebracht, besonders bevorzugt in Form eines zweiten Motivs. Das zweite Motiv der zumindest einen weiteren Schicht kann insbesondere ein verstecktes Motiv sein, das bei Betrachtung mit bloßem Auge praktisch nicht erkennbar ist und erst bei Betrachtung mit einem Polarisator in Erscheinung tritt.

Nach einer weiteren Ausgestaltung des erfindungsgemäßen Verfahrens wird die zweite Schicht in Schritt d) nur unvollständig vernetzt, auf die zweite Schicht zumindest bereichsweise ein Extraktionsmittel, insbesondere ein lösungsmittelhaltiger Lack aufgebracht, und die zweite Schicht nach dem Aufbringen des Extraktionsmittels vollständig vernetzt. Das Extraktionsmittel kann dabei vollflächig oder in Form eines dritten Motivs auf die zweite Schicht aufgebracht werden. Auch das Extraktionsmittel kann in der weiter unten genauer beschriebenen Weise den Farbkippeffekt der unvollständig vernetzten zweiten Schicht lokal verändern und dadurch weitere Variationsmöglichkeiten für die visuelle Gestaltung des Sicherheitselements bereitstellen.

Die unvollständige Vernetzung der Schichten erfolgt vorzugsweise durch Beaufschlagung mit UV-Strahlung bei niedriger Temperatur, insbesondere bei einer Temperatur unterhalb von 30 °C. Die vollständige Vernetzung der Schichten wird mit Vorteil durch Beaufschlagung mit UV-Strahlung bei erhöhter Temperatur, insbesondere bei einer Temperatur oberhalb von 30 °C durchgeführt. Die UV-Beaufschlagung zur Vernetzung erfolgt dabei zweckmäßig in einer Inertgas-Atmosphäre, insbesondere einer Argon-, Stickstoff- oder Kohlendioxid-Atmosphäre.

Die flüssigkristallinen Schichten werden vorteilhaft mittels Tiefdruck, Siebdruck, Flexodruck, Knifecoating oder Curtaincoating aufgedruckt, wobei insbesondere die erste und zweite Schicht auch mit verschiedenen Drucktechniken aufgebracht werden können.

Auf die zweite Schicht werden vorteilhaft eine oder mehrere weitere Schichten aufgebracht, die dem Schutz des Sicherheitselements oder einer seiner Teilschichten, einer verbesserten Haftung einzelner Schichten oder einer weiteren Erhöhung der Fälschungssicherheit dienen.

Nach vollständiger Vernetzung wird die Schichtenfolge mit Vorteil auf ein Zielsubstrat, beispielsweise einen Sicherheitsfadenaufbau übertragen. Das Zielsubstrat weist zweckmäßig eine dunkle, insbesondere eine schwarze Beschichtung auf, um die visuelle Auffälligkeit der Farbkippeffekte zu erhöhen.

Das Sicherheitselement wird vorzugsweise weiter mit einer oder mehreren Funktionsschichten, insbesondere mit Schichten mit visuell und/ oder maschinell erfassbaren Sicherheitsmerkmalen ausgestattet. Die Funktionsschichten können durch vollflächige oder teilflächige reflektierende, hochbrechende, farbkippende, polarisierende, phasenschiebende Schichten, opake oder transparente leitfähige Schichten, weich- oder hartmagnetische Schichten und/oder fluoreszierende oder phosphoreszierende Schichten gebildet werden.

Die Erfindung enthält auch ein Sicherheitselement mit einer farbkippenden Motivschicht für Sicherheitspapiere, Wertdokumente und dergleichen, mit einer ersten Schicht aus einem nicht-chiralen flüssigkristallinen Material und einer auf der ersten Schicht aufgebrachten farbkippenden Motivschicht aus einem chiralen flüssigkristallinen Material, das in der oben beschriebenen Art und Weise hergestellt werden kann.

Dabei weist die farbkippende Motivschicht zumindest zwei Motivbereiche mit unterschiedlichen Farbkippeffekten auf. Die erste Schicht ist in Form des gewünschten Motivs aufgebracht, während die farbkippende Motivschicht vollflächig aufgebracht ist.

Die Erfindung umfasst ferner ein Sicherheitspapier für die Herstellung von Wertdokumenten oder dergleichen sowie ein Wertdokument, wie eine Banknote, eine Ausweiskarte oder dergleichen, wobei Sicherheitspapier bzw. Wertdokument mit einem Sicherheitselement der oben beschriebenen Art ausgestattet sind.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: eine detailliertere Aufsicht auf das Sicherheitselement der Fig. 1,
- Fig. 3: in (a) bis (d) Zwischenschritte bei der Herstellung des Sicherheitselements der Fig. 2,
- Fig. 4: ein Sicherheitselement nach einem weiteren Ausführungsbeispiel der Erfindung, wobei (a) das Erscheinungsbild mit bloßem Auge und (b) das Erscheinungsbild bei Betrachtung mit einem Polarisator zeigt,
- Fig. 5: in (a) bis (d) Zwischenschritte bei der Herstellung des Sicherheitselements der Fig. 4,
- Fig. 6: in (a) bis (d) eine weitere Möglichkeit, den Farbkippeffekt cholesterischer Flüssigkristallschichten nachträglich gezielt zu beeinflussen, und
- Fig. 7: den schematischen Aufbau eines Sicherheitsfadens, bei dem eine kurzwellige Verschiebung mit einer langwelligen Verschiebung kombiniert ist.

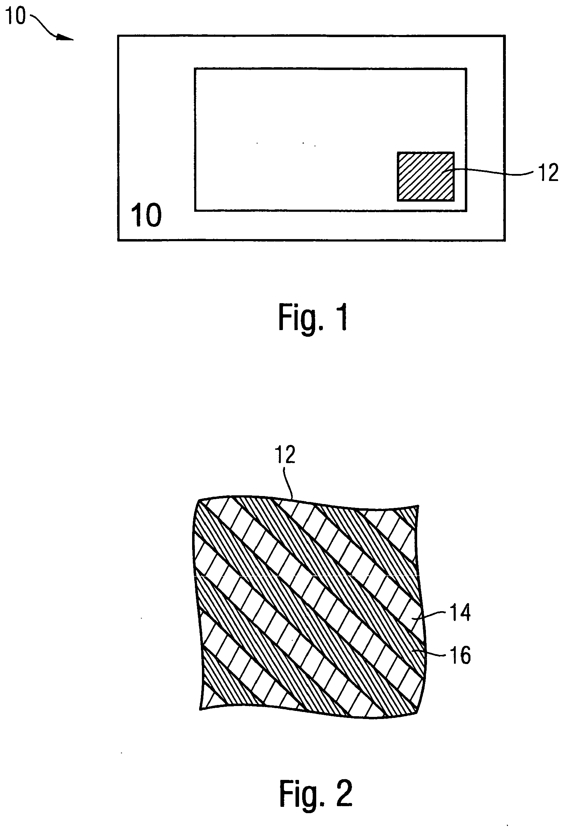

Die Erfindung wird nun am Beispiel einer Banknote erläutert. Fig. 1 zeigt dazu eine schematische Darstellung einer Banknote 10, die mit einem erfindungsgemäßen Sicherheitselement 12 mit einer mehrfarbigen, farbkippenden Motivschicht versehen ist.

In der detaillierteren Aufsicht auf das Sicherheitselement 12 der Fig. 2 sind alternierende streifenförmige Motivbereiche 14 und 16 dargestellt, in denen das Sicherheitselement 12 jeweils einen unterschiedlichen Farbkippeffekt aufweist. Beispielsweise kann sich der Farbeindruck der Motivstreifen 14 beim Kippen des Sicherheitselements von Rot nach Grün und der Farbeindruck der Motivstreifen 16 von Grün nach Blau ändern. Anstelle des zur Illustration verwendeten Streifenmotivs können selbstverständlich auch andere Motive, insbesondere beliebige Muster, Zeichen oder Codierungen mit unterschiedlichen Farbeindrücken gestalten werden. Durch die mit der Erfindung erreichbare Kantenschärfe der Motive steht dem Designer eine Vielzahl möglicher Gestaltungen zur Verfügung.

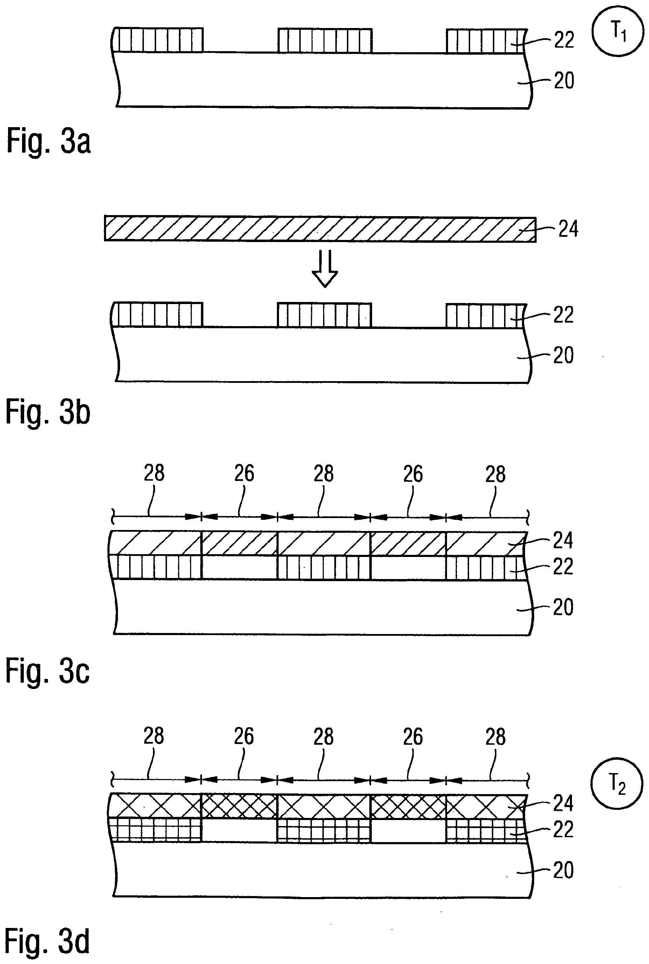

Die besonderen Verfahrensschritte bei der Herstellung des Sicherheitselements 12 der Fig. 2 werden nun anhand der Fig. 3 näher erläutert, wobei die Teilbilder jeweils Querschnitte durch das Sicherheitselement bei Zwischenschritten des Herstellungsverfahrens zeigen.

Mit Bezug auf Fig. 3(a) wird zunächst auf eine Trägerfolie 20, beispielsweise eine PET-Folie guter Oberflächenqualität, eine erste Schicht 22 aus nematischem flüssigkristallinem Material in Form des gewünschten Motivs aufgedruckt. Durch Beaufschlagen mit UV-Strahlung bei einer niedrigen Temperatur T₁ wird die erste Schicht 22 nur unvollständig vernetzt. Die niedrige Temperatur T₁ liegt dabei insbesondere unterhalb von 30 °C, im Ausführungsbeispiel bei 20 °C. Diese niedrige Temperatur kann beispielsweise dadurch erreicht werden, dass die Trägerfolie während der UV-Beaufschlagung über eine entsprechend eingestellte Kühlwalze geführt wird.

Genauer gesagt wird die erste Schicht 22 in diesem Verfahrensschritt so stark vernetzt, dass sie tackfrei und wickelbar ist, die Vernetzung aber noch nicht vollständig erfolgt ist, um die im Folgenden beschriebene Wechselwirkung mit der anschließend aufgebrachten zweiten Schicht zu ermöglichen.

In einem nächsten Schritt wird, wie in Fig. 3(b) illustriert, vollflächig eine zweite Schicht 24 aus einem cholesterischen flüssigkristallinen Material aufgedruckt. Entsprechend der Konzentration des eingesetzten Verdrillers zeigt die cholesterische zweite Schicht 24 im fertigen Sicherheitselement in den Schichtbereichen 26 ohne darunterliegende erste Schicht 22 einen Farbkippeffekt mit einer gewissen Auslegungswellenlänge des Reflexionsmaximums. Beispielsweise kann der Farbkippeffekt der unbeeinflussten zweiten Schicht 24 einen Farbeindruck zeigen, der sich beim Kippen des Sicherheitselements aus der Senkrechten heraus von Grün nach Blau ändert.

In den Schichtbereichen 28, in denen die Trägerfolie 20 bereits mit der teilweise vernetzten ersten Schicht 22 bedruckt ist, findet nun eine Wechselwirkung zwischen dem neu aufgebrachten cholesterischen Flüssigkristallmaterial und den darunterliegenden Nematen statt, die sich in einer Verschiebung des Reflexionsmaximums der zweiten Schicht 24 in den langwelligen Bereich zeigt. Beispielsweise weisen im fertigen Sicherheitselement die Schichtbereiche 28 nach erfolgter Wechselwirkung einen Farbkippeffekt auf, bei dem sich der Farbeindruck beim Kippen des Sicherheitselements aus der Senkrechten heraus von Rot nach Grün ändert. Diese unterschiedlichen Farbkippeffekte der zweiten Schicht 24 sind in Fig. 3(c) durch die unterschiedliche Schraffur der Schichtbereiche 26 und 28 angedeutet.

Ohne an eine bestimmte Erklärung gebunden zu sein, wird gegenwärtig vermutet, dass die langwellige Verschiebung des Reflexionsmaximums von einer Vermischung des aufgebrachten cholesterischen Flüssigkristallmaterials mit dem noch nicht vollständig vernetzten nematischen Flüssigkristallmaterial während des Druckvorgangs herrührt. Durch die niedrige Polymerisationstemperatur T₁ bleibt der Vernetzungsgrad der Nematenschicht 22 zunächst so niedrig, dass beim Druck der zweiten cholesterischen Schicht 24 ein Anlösen der ersten Schicht 22 erfolgt.

In den Schichtbereichen 28 sinkt durch die Mischung des aufgedruckten cholesterischen Flüssigkristallmaterials mit den nematischen Flüssigkristallen die Konzentration des Verdrillers in der zweiten Schicht 24. Die Pitchhöhe nimmt dadurch zu und das Reflexionsmaximum wird entsprechend ins Langwellige verschoben. In den Schichtbereichen 26 ohne darunterliegende erste Schicht 24 findet keine Wechselwirkung und damit auch keine Verschiebung des Reflexionsmaximums statt, dort wird vielmehr ein Farbkippeffekt entsprechend der Auslegung der cholesterischen Schicht 24 beobachtet.

Zurückkommend auf die Darstellung der Fig. 3 werden die erste und zweite Schicht 22, 24 nunmehr durch UV-Beaufschlagung bei einer höheren Temperatur T₂ vollständig vernetzt, was in Fig. 3(d) durch die Kreuzschraffur angedeutet ist. Vorzugsweise erfolgt die Vernetzung bei einer Temperatur T₂ oberhalb von 50 °C. Die beiden unterschiedlichen Farbkippeffekte in den Schichtbereichen 26 und 28 der zweiten Schicht 24 werden dadurch dauerhaft fixiert.

Weitere Verfahrensschritte zur Herstellung des Sicherheitselements 12 schließen sich in herkömmlicher Weise an. Beispielsweise kann die Schichtenfolge der Fig. 3(d) noch mit einem Kaschierkleber beschichtet und auf ein gewünschtes Zielsubstrat übertragen werden. Je nach Anwendung kann die Trägerfolie 20 entfernt werden oder auch einen Teil des fertigen Sicherheitselements bilden.

Die erreichbare Kantenschärfe der unterschiedlichen nebeneinanderliegenden Farbkippeffekte der Schichtbereiche 26 und 28 ist in der vorliegenden Erfindung im Wesentlichen nur durch die erreichbare hohe Kantenschärfe der aufgedruckten Nematenschicht 22 bestimmt. Die unterschiedlichen farbkippenden Motivbereiche 26, 28 können daher ebenfalls eine sehr hohe Kantenschärfe aufweisen.

Je nach der Menge der nur unvollständig vernetzten Nematen 22 kann die cholesterische Schicht 24 von diesen mehr oder weniger stark beeinflusst werden. Wird die cholesterische Schicht 24 beispielsweise für einen Farbkippeffekt von Blau nach Ultraviolett ausgelegt, können durch unterschiedliche Schichtdicken der Nematenschicht 22 verschieden starke Farbverschiebungen ins Langwellige erreicht werden, im Extremfall bis hin zu einem Farbkippeffekt von Infrarot nach Rot. Die verschiedenen Farbkippeffekte können dabei in einem Sicherheitselement mit einer einzigen cholesterischen Schicht 24 verwirklicht werden.

Die erfindungsgemäße Wechselwirkung der beiden Schichten ist unerwartet, da die erste Schicht nach der unvollständigen Vernetzung bereits tackfrei und daher wickelbar ist. Der Effekt kann beispielsweise auch in den Fällen vorteilhaft ausgenutzt werden, in denen keine Möglichkeit besteht, Nass-in-Nass zu drucken. Da die aufgedruckten Flüssigkristallschichten jeweils eine gewisse Alignmentstrecke benötigen, ist es schwierig, eine Druckmaschine mit mehreren aufeinanderfolgenden Druckwerken und ausreichend langen Alignmentstrecken zu finden.

Darüber hinaus bietet das erfindungsgemäße Verfahren eine große Freiheit bei der Wahl der Druckverfahren, da die erste und zweite Schicht wegen der Wickelbarkeit der ersten Schicht mit unterschiedlichen Druckverfahren und sogar auf unterschiedlichen Druckmaschinen erzeugt werden können.

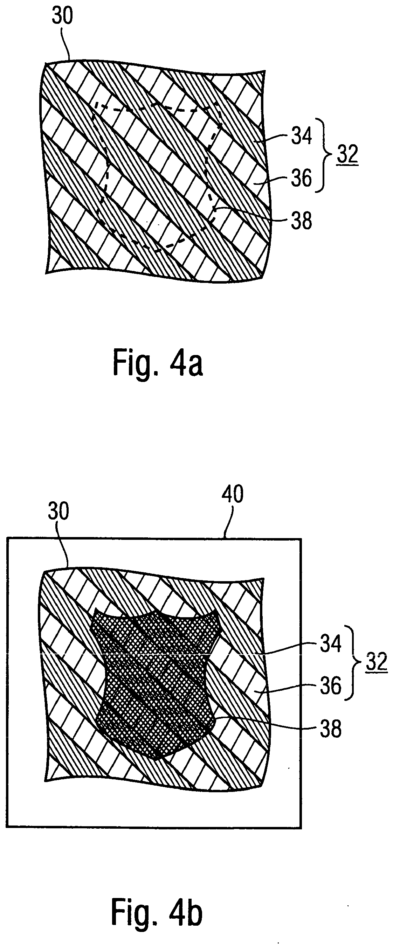

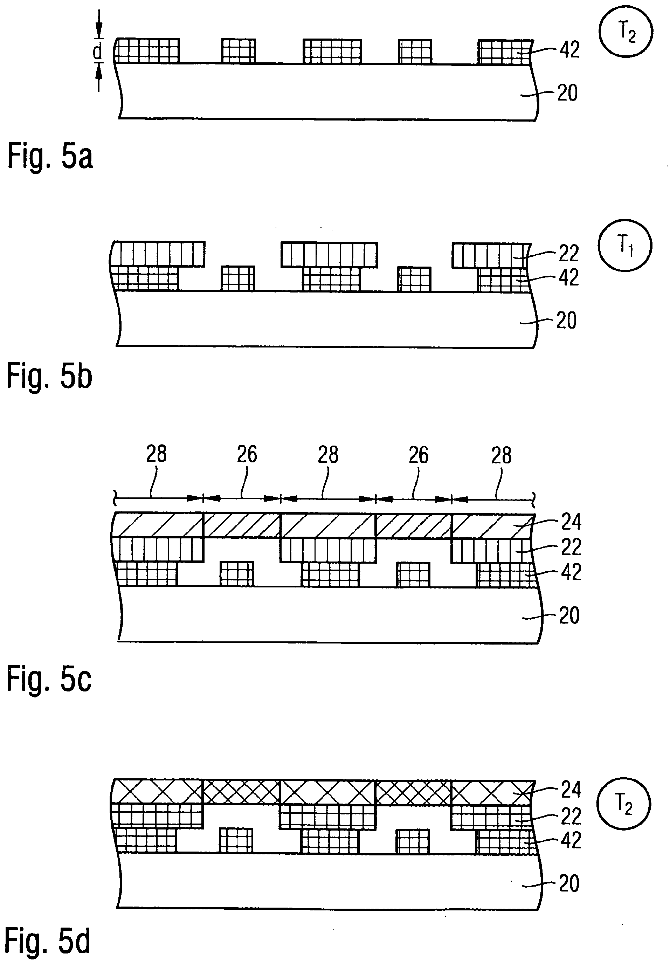

Ein weiteres Ausführungsbeispiel der Erfindung wird nun anhand der Figuren 4 und 5 erläutert. Das Sicherheitselement 30 der Fig. 4 weist ein offenes erstes Motiv 32 auf, das durch Bereiche 34 und 36 mit unterschiedlichem Farbkippeffekt gebildet ist, wie in Fig. 4(a) gezeigt. Darüber hinaus enthält das Sicherheitselement 30 ein verstecktes zweites Motiv 38, das bei Betrachtung mit bloßem Auge praktisch nicht erkennbar ist und erst bei Betrachtung mit einem Polarisator 40 deutlich in Erscheinung tritt, wie in Fig. 4(b) dargestellt.

Zwischenschritte bei der erfindungsgemäßen Herstellung des Sicherheitselements 30 sind in den Teilbildern der Fig. 5 veranschaulicht. Bezug nehmend auf die Fig. 5(a) wird zunächst eine dritte Schicht 42 aus einem nematischen flüssigkristallinen Material in Form des gewünschten versteckten Motivs, hier des Wappenmotivs der Fig. 4(b), auf eine Trägerfolie 20 aufgedruckt und durch Beaufschlagung mit UV-Strahlung bei einer hohen Temperatur T₂ vollständig vernetzt.

Diese dritte Schicht 42, die der Erzeugung des versteckten Motivs dient, wird in einer variierenden Schichtdicke aufgebracht, die einen guten Motivkontrast im Polarisator sicherstellt. Anstelle der in Fig. 5(a) gezeigten Dickenvariation zwischen einer Schichtdicke d und der Schichtdicke Null können für die dritte Schicht 42 selbstverständlich auch Dickenvariation zwischen einer ersten und einer zweiten Schichtdicke d₁ bzw. d₂, oder zwischen mehr als zwei verschiedenen Schichtdicken zum Einsatz kommen.

Wie in Fig. 5(b) dargestellt, wird auf die dritte Schicht 42 eine erste Schicht 22 aus nematischem flüssigkristallinem Material in Form des gewünschten offenen Motivs aufgedruckt. Die erste Schicht 22 wird wie beim Ausführungsbeispiel der Fig. 3 durch Beaufschlagung mit UV-Strahlung bei einer niedrigen Temperatur T₁ nur unvollständig vernetzt. In der Regel wird die erste Schicht 22 dünner als die dritte Schicht 42 ausgebildet, so dass sie im fertigen Sicherheitselement eine geringere Wirkung auf die Polarisation des durchtretenden Lichts ausübt.

Im nächsten Schritt wird dann vollflächig eine zweite Schicht 24 aus einem cholesterischen flüssigkristallinen Material aufgedruckt. Wie bereits bei Fig. 3(c) beschrieben, entstehen durch die Wechselwirkung der cholesterischen Schicht 24 mit der darunterliegenden, unvollständig vernetzten Nematenschicht 22 zwei Schichtbereiche 26, 28 mit unterschiedlichem Farbkippeffekt, wobei die Schichtbereiche 26 und 28 zusammen das offene Motiv bilden. Diese entstandene Situation ist in Fig. 5(c) schematisch dargestellt. Eine entsprechende Wechselwirkung der cholesterischen Schicht 24 mit der dritten Schicht 42 kann nicht stattfinden, da die dritte Schicht 42 beim Aufbringen der zweiten Schicht 24 bereits vollständig ausgehärtet ist und daher, anders als die erste Schicht 22, beim Druck nicht angelöst wird.

Nachfolgend werden die erste und zweite Schicht 22,24 durch UV-Beaufschlagung bei einer höheren Temperatur T₂ vollständig vernetzt, wie in Fig. 5(d) dargestellt, um die unterschiedlichen Farbkippeffekte des ersten Motivs 26, 28 dauerhaft zu fixieren. Weitere an sich bekannte Verfahrensschritte zur Fertigstellung des Sicherheitselements können sich anschließen.

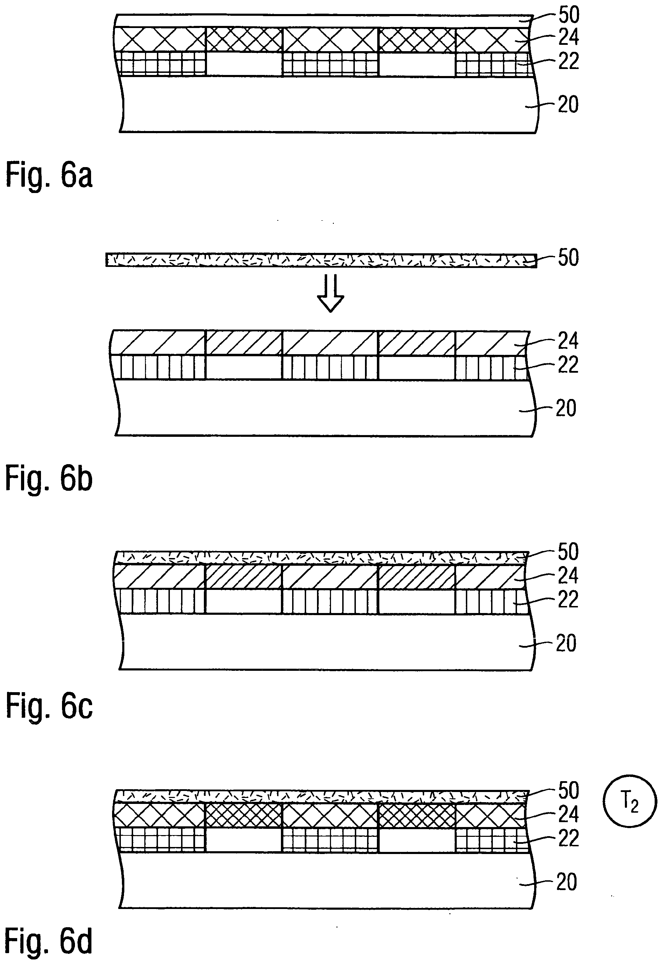

Fig. 6 illustriert eine weitere erfindungsgemäße Möglichkeit, den Farbkippeffekt cholesterischer Flüssigkristallschichten nachträglich gezielt zu beeinflussen:
Wird auf die Schichtenfolge der Fig. 3(d) für die Weiterverarbeitung eine vollflächige Schicht eines Kaschierklebers 50 aufgebracht, wie in Fig. 6(a) dargestellt, so bleibt das Farbspiel der Schichtbereiche 26, 28 davon unbeeinflusst, da die vollständige Aushärtung der cholesterischen Schicht 24 deren Farbkippeffekte bereits fixiert hat.

Wird der Kaschierkleber andererseits, wie in Fig. 6(b) dargestellt, bereits vor der vollständigen Aushärtung der ersten und zweiten Schicht 22, 24 aufgebracht, so wird eine Verschiebung der Farbkippeffekte der Schichtbereiche 26, 28 ins Kurzwellige beobachtet, was in der Darstellung der Fig. 6(c) durch die engere Schraffur angedeutet ist. Diese kurzwellige Verschiebung der Farbkippeffekte wird nachfolgend durch Vernetzen bei der höheren Temperatur T₂ fixiert, wie in Fig. 6(d) dargestellt. Gegenüber der Ausgestaltung der Fig. 6(a) zeigt das Sicherheitselement der Fig. 6(d) somit das erste Motiv mit gemeinsam ins Kurzwellige verschobenen Farbkippeffekten in den Bereichen 26, 28.

Die kurzwellige Verschiebung der Farbkippeffekte kann auch durch das Aufbringen eines anderen lösungsmittelhaltigen Beschichtungsstoffes, beispielsweise eines lösungsmittelhaltigen Lacks erreicht werden. Dabei kann der lösungsmittelhaltige Beschichtungsstoff insbesondere auch in Form eines weiteren Motivs aufgebracht werden, um eine lokal unterschiedliche Änderung der Farbkippeffekte zu erzielen.

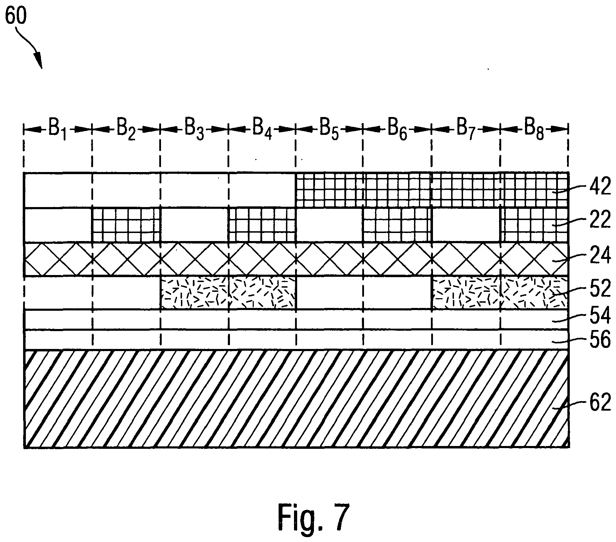

Diese kurzwellige Verschiebung kann auch mit der oben beschriebenen langwelligen Verschiebung durch eine unvollständig vernetzte Nematenschicht kombiniert werden, so dass durch einfache Maßnahmen eine Vielzahl unterschiedlicher Farbkippeffekte in einem einzigen Sicherheitselement verwirklicht werden kann, wie nachfolgend anhand der Darstellung der Fig. 7 illustriert.

Fig. 7 zeigt einen beispielhaften Aufbau eines Sicherheitsfadens 60, bei dem die Schichtenfolge der Flüssigkristallschichten bereits auf einen Fadengrundaufbau 62 übertragen und die für die Herstellung eingesetzte Trägerfolie abgelöst wurde. Die Reihenfolge der gezeigten Flüssigkristallschichten ist daher gegenüber den Darstellungen der Figuren 3, 5 und 6 invertiert.

Von oben nach unten gesehen weist der Sicherheitsfaden 60 eine dritte Schicht 42 aus einem nematischen flüssigkristallinen Material in Form eines gewünschten zweiten (versteckten) Motivs, eine erste Schicht 22 aus einem nematischen flüssigkristallinen Material in Form eines gewünschten ersten (offenen) Motivs, eine vollflächig aufgebrachte zweite Schicht 24 aus einem cholesterischen flüssigkristallinen Material, eine in Form eines gewünschten dritten (offenen) Motivs aufgebrachte lösungsmittelhaltige Lackschicht 52, eine vollflächig aufgebrachte Lackschicht 54, eine Kaschierkleberschicht 56 und einen Fadengrundaufbau 62 auf.

Der Fadengrundaufbau 62 folgt an sich bekannten Gestaltungen und kann beispielsweise eine Metallisierung mit Negativschrift, eine Rastermetallisierung, eine schwarze Beschichtung mit Negativschrift und/ oder magnetische Schichtbereiche enthalten.

Diese dritte Schicht 42 wurde bei der Herstellung des Sicherheitsfadens 62 nach dem Aufbringen bei einer höheren Temperatur vollständig vernetzt, wie im Zusammenhang mit Fig. 5 beschrieben. Die erste Schicht 22 wurde nach dem Aufbringen zunächst bei einer niedrigen Temperatur nur unvollständig vernetzt. Auf diese unvollständig vernetzte erste Schicht wurde vollflächig die zweite Schicht 24 aufgedruckt und auch die zweite Schicht 24 zunächst bei einer niedrigen Temperatur nur unvollständig vernetzt. Dann wurde die lösungsmittelhaltige Lackschicht 52 auf die unvollständig vernetzte zweite Schicht 24 aufgebracht.

Die cholesterische zweite Schicht 24 wird bei dem Ausführungsbeispiel der Fig. 7 daher zweifach beeinflusst: Zum einen durch die Wechselwirkung mit der unvollständig vernetzten Nematenschicht 22, die zu einer lokalen Verschiebung des Farbkippeffekts ins Langwellige führt, zum anderen durch die Wechselwirkung mit der lösungsmittelhaltigen Lackschicht, die zu einer lokalen Verschiebung des Farbkippeffekts der unvollständig vernetzten cholesterischen Schicht 24 ins Kurzwellige führt.

Erst nach dem Aufbringen der lösungsmittelhaltigen Lackschicht 52 wurden die erste und zweite Schicht 22, 24 durch UV-Beaufschlagung bei höherer Temperatur vollständig vernetzt und die vorher induzierten lokalen Änderungen der farbkippenden Eigenschaften der cholesterischen Schicht fixiert. Das nachfolgende Aufbringen der weiteren Lackschicht 54, der Kaschierkleberschicht 56 und das Übertragen der Schichtenfolge auf den Fadengrundaufbau 62 haben dann keinen Einfluss mehr auf das Erscheinungsbild der Farbkippeffekte.

Insgesamt entstehen auf diese Weise in dem Sicherheitsfaden 60 acht Bereiche B₁ bis B₈ mit unterschiedlichem Erscheinungsbild, wie in Fig. 7 gezeigt. Im ersten Bereich B₁ ist der unbeeinflusste Farbkippeffekt der cholesterischen Schicht 24 zu erkennen. Im zweiten Bereich B₂ erscheint der Farbkippeffekt der cholesterischen Schicht 24 durch die Wechselwirkung mit der ersten Schicht 22 ins Langwellige verschoben, wie in Zusammenhang mit Fig. 3 erläutert.

Im dritten Bereich B₃ ist der Farbkippeffekt der cholesterischen Schicht 24 durch die Wechselwirkung mit der lösungsmittelhaltigen Lackschicht 52 ins Kurzwellige verschoben, wie bei Fig. 6 erläutert. Im Bereich B₄ überlagern sich die kurzwellige und die langwellige Verschiebung zu einer effektiven Gesamt-Farbverschiebung, die von den relativen Größen der beiden Komponenten abhängt.

Es versteht sich, dass das Ausmaß der Verschiebung ins Langwellige der Bereich B₂ und B₄, und das Ausmaß der Verschiebung ins Kurzwellige der Bereich B₃ und B₄ jeweils durch die Schichtdicke der ersten Schicht 22 bzw. der lösungsmittelhaltigen Lackschicht 52 eingestellt werden kann. Die Schichten 22 und 52 können in Unterbereichen auch verschiedene Dicke aufweisen, so dass verschieden starke Verschiebungen in einem einzigen Sicherheitselement realisiert werden können.

Die Bereiche B₅ bis B₈ unterscheiden sich von den Bereichen B₁ bis B₄ nur dadurch, dass sie auf der dritten Schicht 42 aufgebracht sind. Sie zeigen daher bei Betrachtung ohne Hilfsmittel dasselbe Erscheinungsbild wie die Bereiche B₁ bis B₄, heben sich aber bei Betrachtung im Polarisator von diesen deutlich ab, wie bereits bei der Beschreibung der Fig. 4 erläutert.

Insgesamt eröffnet die Erfindung dem Designer eine Vielzahl an Möglichkeiten, scharf begrenzte offene und versteckte Motive mit unterschiedlichen Farbkippeffekten in einem einzigen Sicherheitselement zu kombinieren.

## Patentansprüche

1. Verfahren zum Herstellen eines Sicherheitselements mit farbkippender Motivschicht für Sicherheitspapiere, Wertdokumente und dergleichen, bei dem
a) auf einen Träger (20) eine erste Schicht (22) aus einem nicht-chiralen flüssigkristallinen Material aufgebracht wird,
b) die erste Schicht (22) nur unvollständig vernetzt wird,
c) eine zweite Schicht (24) aus einem chiralen flüssigkristallinen Material mit einem Farbkippeffekt auf die nur unvollständig vernetzte erste Schicht (22) aufgebracht wird, und
d) die zweite Schicht (24) unvollständig oder vollständig vernetzt wird.

2. Verfahren nach Anspruch 1, **dadurch gekennzeichnet, dass** in Schritt a) eine Schicht (22) aus einem nematischen flüssigkristallinen Material aufgebracht wird.

3. Verfahren nach Anspruch 1 oder 2, **dadurch gekennzeichnet, dass** die erste Schicht (22) in Schritt a) in Form eines ersten Motivs aufgebracht wird.

4. Verfahren nach Anspruch 3, **dadurch gekennzeichnet, dass** das erste Motiv durch Bereiche unterschiedlicher Schichtdicke des nicht-chiralen flüssigkristallinen Materials gebildet wird.

5. Verfahren nach wenigstens einem der Ansprüche 1 bis 4, **dadurch gekennzeichnet, dass** in Schritt c) eine Schicht aus einem cholesterischen flüssigkristallinen Material aufgebracht wird.

6. Verfahren nach Anspruch 5, **dadurch gekennzeichnet, dass** das cholesterische flüssigkristalline Material durch Kombination eines nematischen Flüssigkristallsystems mit einem Verdriller gebildet wird.

7. Verfahren nach wenigstens einem der Ansprüche 1 bis 6, **dadurch gekennzeichnet, dass** die zweite Schicht in Schritt c) vollflächig aufgebracht wird.

8. Verfahren nach wenigstens einem der Ansprüche 1 bis 7, **dadurch gekennzeichnet, dass** die erste Schicht in Schritt b) so stark vernetzt wird, dass sie tackfrei und wickelbar ist.

9. Verfahren nach wenigstens einem der Ansprüche 1 bis 8, **dadurch gekennzeichnet, dass** die zweite Schicht in Schritt d) nur so unvollständig vernetzt wird, so dass sie tackfrei und wickelbar ist.

10. Verfahren nach wenigstens einem der Ansprüche 1 bis 9, **dadurch gekennzeichnet, dass** die unvollständige Vernetzung der ersten und/ oder zweiten Schicht durch Vernetzung bei niedriger Temperatur erreicht wird.

11. Verfahren nach Anspruch 10, **dadurch gekennzeichnet, dass** die unvollständige Vernetzung bei einer Temperatur von 30 °C oder weniger durchgeführt wird.

12. Verfahren nach wenigstens einem der Ansprüche 1 bis 11, **dadurch gekennzeichnet, dass** die erste (22) und/oder zweite Schicht (24) in einem späteren Verfahrensschritt e) vollständig vernetzt werden.

13. Verfahren nach Anspruch 12, **dadurch gekennzeichnet, dass** die vollständige Vernetzung der ersten (22) und/ oder zweiten Schicht (24) bei erhöhter Temperatur erreicht wird.

14. Verfahren nach wenigstens einem der Ansprüche 1 bis 13, **dadurch gekennzeichnet, dass** in Schritt a) zunächst zumindest eine weitere Schicht (42) aus einem flüssigkristallinen Material auf den Träger aufgebracht wird, die zumindest eine weitere Schicht (42) vollständig vernetzt wird und dann die erste Schicht (22) auf die vollständig vernetzte, zumindest eine weitere Schicht aufgebracht wird.

15. Verfahren nach Anspruch 14, **dadurch gekennzeichnet, dass** als zumindest eine weitere Schicht (42) eine Schicht eines nematischen flüssigkristallinen Materials aufgebracht wird.

16. Verfahren nach Anspruch 14 oder 15, **dadurch gekennzeichnet, dass** die zumindest eine weitere Schicht (42) in Form eines zweiten Motivs aufgebracht wird.

17. Verfahren nach wenigstens einem der Ansprüche 1 bis 16, **dadurch gekennzeichnet, dass** die zweite Schicht (24) in Schritt d) nur unvollständig vernetzt wird, auf die zweite Schicht (24) zumindest bereichsweise ein Extraktionsmittel, insbesondere ein lösungsmittelhaltiger Lack aufgebracht wird, und die zweite Schicht (24) nach dem Aufbringen des Extraktionsmittels vollständig vernetzt wird.

18. Verfahren nach Anspruch 17, **dadurch gekennzeichnet, dass** das Extraktionsmittel vollflächig auf die zweite Schicht aufgebracht wird.

19. Verfahren nach Anspruch 17, **dadurch gekennzeichnet, dass** das Extraktionsmittel in Form eines dritten Motivs auf die zweite Schicht (24) aufgebracht wird.

20. Verfahren nach wenigstens einem der Ansprüche 1 bis 19, **dadurch gekennzeichnet, dass** eine unvollständige Vernetzung der Schichten durch Beaufschlagung mit UV-Strahlung bei niedriger Temperatur, insbesondere bei einer Temperatur unterhalb von 30 °C erfolgt.

21. Verfahren nach wenigstens einem der Ansprüche 1 bis 20, **dadurch gekennzeichnet, dass** eine vollständige Vernetzung der Schichten durch Beaufschlagung mit UV-Strahlung bei erhöhter Temperatur, insbesondere bei einer Temperatur oberhalb von 30 °C erfolgt.

22. Verfahren nach wenigstens einem der Ansprüche 1 bis 21, **dadurch gekennzeichnet, dass** die Beaufschlagung mit UV-Strahlung zur Vernetzung in einer Inertgas-Atmosphäre, insbesondere einer Argon-, Stickstoff- oder Kohlendioxid-Atmosphäre erfolgt.

23. Verfahren nach wenigstens einem der Ansprüche 1 bis 22, **dadurch gekennzeichnet, dass** die flüssigkristallinen Schichten mittels Tiefdruck, Siebdruck, Flexodruck, Knifecoating oder Curtaincoating aufgedruckt werden.

24. Verfahren nach wenigstens einem der Ansprüche 1 bis 23, **dadurch gekennzeichnet, dass** auf die zweite Schicht (24) eine oder mehrere weitere Schichten aufgebracht werden, die dem Schutz des Sicherheitselements oder einer seiner Teilschichten, einer verbesserten Haftung einzelner Schichten oder einer weiteren Erhöhung der Fälschungssicherheit dienen.

25. Verfahren nach wenigstens einem der Ansprüche 1 bis 24, **dadurch gekennzeichnet, dass** die Schichtenfolge nach vollständiger Vernetzung auf ein Zielsubstrat, insbesondere einen Sicherheitsfadenaufbau übertragen wird.

26. Verfahren nach Anspruch 25, **dadurch gekennzeichnet, dass** das Zielsubstrat eine dunkle, insbesondere eine schwarze Beschichtung aufweist.

27. Verfahren nach wenigstens einem der Ansprüche 1 bis 26, **dadurch gekennzeichnet, dass** das Sicherheitselement weiter mit einer oder mehreren Funktionsschichten, insbesondere mit Schichten mit visuell und/oder maschinell erfassbaren Sicherheitsmerkmalen ausgestattet wird.

28. Verfahren nach Anspruch 27, **dadurch gekennzeichnet, dass** die Funktionsschichten durch vollflächige oder teilflächige reflektierende, hochbrechende, farbkippende, polarisierende, phasenschiebende Schichten, opake oder transparente leitfähige Schichten, weich- oder hartmagnetische Schichten und/ oder fluoreszierende oder phosphoreszierende Schichten gebildet werden.

29. Sicherheitselement mit einer farbkippenden Motivschicht für Sicherheitspapiere, Wertdokumente und dergleichen, mit einer ersten Schicht (22) aus einem nicht-chiralen flüssigkristallinen Material und einer auf der ersten Schicht (22) aufgebrachten farbkippenden Motivschicht (24) aus einem chiralen flüssigkristallinen Material, herstellbar nach einem der Ansprüche 1 bis 28, bei dem die farbkippende Motivschicht (24) zumindest zwei Motivbereiche (26, 28) mit unterschiedlichen Farbkippeffekten aufweist, die erste Schicht (22) in Form des gewünschten Motivs aufgebracht ist, und die farbkippende Motivschicht (24) vollflächig aufgebracht ist.

30. Sicherheitspapier für die Herstellung von Wertdokumenten oder dergleichen, mit einem Sicherheitselement (12) nach Anspruch 29 oder einem nach einem der Ansprüche 1 bis 28 herstellbaren Sicherheitselement.

31. Wertdokument (10) wie Banknote, Ausweiskarte oder dergleichen, mit einem Sicherheitselement (12) nach Anspruch 29 oder einem nach einem der Ansprüche 1 bis 28 herstellbaren Sicherheitselement.

## Claims

1. A method for manufacturing a security element having a color-shifting motif layer for security papers, value documents and the like, in which
a) to a carrier (20) is applied a first layer (22) composed of a non-chiral liquid crystal material,
b) the first layer (22) is only incompletely crosslinked,
c) a second layer (24) composed of a chiral liquid crystal material having a color-shift effect is applied to the only incompletely crosslinked first layer (22), and
d) the second layer (24) is incompletely or completely crosslinked.

2. The method according to claim 1, **characterized in that,** in step a), a layer (22) composed of a nematic liquid crystal material is applied.

3. The method according to claim 1 or 2, **characterized in that** the first layer (22) in step a) is applied in the form of a first motif.

4. The method according to claim 3, **characterized in that** the first motif is formed by regions of differing layer thickness of the non-chiral liquid crystal material.

5. The method according to at least one of claims 1 to 4, **characterized in that,** in step c), a layer (24) composed of a cholesteric liquid crystal material is applied.

6. The method according to claim 5, **characterized in that** the cholesteric liquid crystal material is formed by combining a nematic liquid crystal system with a twister.

7. The method according to at least one of claims 1 to 6, **characterized in that** the second layer (24) in step c) is applied contiguously.

8. The method according to at least one of claims 1 to 7, **characterized in that** the first layer (22) in step b) is crosslinked so strongly that it is tack free and windable.

9. The method according to at least one of claims 1 to 8, **characterized in that** the second layer (24) in step d) is crosslinked only sufficiently incompletely that it is tack free and windable.

10. The method according to at least one of claims 1 to 9, **characterized in that** the incomplete crosslinking of the first (22) and/ or second layer (24) is achieved by crosslinking at low temperature.

11. The method according to claim 10, **characterized in that** the incomplete crosslinking is carried out at a temperature of 30°C or less.

12. The method according to at least one of claims 1 to 11, **characterized in that** the first (22) and/or second layer (24) are completely crosslinked in a later method step e).

13. The method according to claim 12, **characterized in that** the complete crosslinking of the first (22) and/or second layer (24) is achieved at elevated temperature.

14. The method according to at least one of claims 1 to 13, **characterized in that** in step a), first, at least one further layer (42) composed of a liquid crystal material is applied to the carrier, the at least one further layer (42) is completely crosslinked, and then the first layer (22) is applied to the completely crosslinked, at least one further layer.

15. The method according to claim 14, **characterized in that** a layer of a nematic liquid crystal material is applied as the at least one further layer (42).

16. The method according to claim 14 or 15, **characterized in that** the at least one further layer (42) is applied in the form of a second motif.

17. The method according to at least one of claims 1 to 16, **characterized in that** the second layer (24) in step d) is only incompletely crosslinked, an extractant, especially a solvent-containing lacquer, is applied to the second layer (24) at least in some regions, and the second layer (24) is completely crosslinked following the application of the extractant.

18. The method according to claim 17, **characterized in that** the extractant is applied contiguously to the second layer.

19. The method according to claim 17, **characterized in that** the extractant is applied to the second layer (24) in the form of a third motif.

20. The method according to at least one of claims 1 to 19, **characterized in that** an incomplete crosslinking of the layers occurs through impingement with UV radiation at low temperature, especially at a temperature below 30°C.

21. The method according to at least one of claims 1 to 20, **characterized in that** a complete crosslinking of the layers occurs through impingement with UV radiation at elevated temperature, especially at a temperature above 30°C.

22. The method according to at least one of claims 1 to 21, **characterized in that** the impingement with UV radiation for crosslinking occurs in an inert gas atmosphere, especially an argon, nitrogen or carbon dioxide atmosphere.

23. The method according to at least one of claims 1 to 22, **characterized in that** the liquid crystal layers are imprinted by means of intaglio printing, screen printing, flexo printing, knife coating or curtain coating.

24. The method according to at least one of claims 1 to 23, **characterized in that** to the second layer (24) are applied one or more further layers that serve to protect the security element or one of its sub-layers, to improve the adhesion of individual layers or to further increase the counterfeit security.

25. The method according to at least one of claims 1 to 24, **characterized in that,** following complete crosslinking, the layer sequence is transferred to a target substrate, especially a security thread structure.

26. The method according to claim 25, **characterized in that** the target substrate comprises a dark, especially a black coating.

27. The method according to at least one of claims 1 to 26, **characterized in that** the security element is further furnished with one or more functional layers, especially with layers having visually and/or machine-perceptible security features.

28. The method according to claim 27, **characterized in that** the functional layers are formed by contiguous or partial-surface reflective, high-index, color-shifting, polarizing, phase-shifting layers, opaque or transparent conductive layers, soft- or hard-magnetic layers and/or fluorescent or phosphorescent layers.

29. A security element having a color-shifting motif layer for security papers, value documents and the like, having a first layer (22) composed of a non-chiral liquid crystal material and, applied on the first layer (22), a color-shifting motif layer (24) composed of a chiral liquid crystal material, manufacturable according to one of claims 1 to 28, in which the color-shifting motif layer (24) comprises at least two motif regions (26, 28) having different color-shift effects, the first layer (22) is applied in the form of the desired motif, and the color-shifting motif layer (24) is applied contiguously.

30. A security paper for manufacturing value documents or the like, having a security element (12) according to claim 29 or a security element manufacturable according to one of claims 1 to 28.

31. A value document (10) such as a banknote, identity card or the like, having a security element (12) according to claim 29 or a security element manufacturable according to one of claims 1 to 28.

## Revendications

1. Procédé destiné à la fabrication d'un élément de sécurité avec une couche de motif à effet de changement de couleur pour des papiers de sécurité, des documents de valeur et similaires, lors duquel
a) on applique sur un support (20) une première couche (22) en une matière cristalline liquide non chirale,
b) on ne réticule la première couche (22) que de manière incomplète,
c) on applique sur la première couche (22) réticulée de manière incomplète une deuxième couche (24) en une matière cristalline liquide non chirale avec un effet de changement de couleur et
d) on réticule de deuxième couche (24) de manière incomplète ou complète.

2. Procédé selon la revendication 1, **caractérisé en ce que** dans l'étape a), on applique une couche (22) en une matière cristalline liquide nématique.

3. Procédé selon la revendication 1 ou la revendication 2, **caractérisé en ce qu'**on applique la première couche (22) dans l'étape a) sous la forme d'un premier motif.

4. Procédé selon la revendication 3, **caractérisé en ce qu'**on forme le premier motif par des zones de différentes épaisseurs de couche de la matière cristalline liquide non chirale.

5. Procédé selon au moins l'une quelconque des revendications 1 à 4, **caractérisé en ce que** dans l'étape c), on applique une couche (24) en une matière cristalline liquide cholestérique.

6. Procédé selon la revendication 5, **caractérisé en ce que** qu'on forme la matière cristalline liquide cholestérique par association d'un système cristallin liquide nématique avec un rotateur.

7. Procédé selon au moins l'une quelconque des revendications 1 à 6, **caractérisé en ce que** dans l'étape c), on applique la deuxième couche (24) à pleine surface.

8. Procédé selon au moins l'une quelconque des revendications 1 à 7, **caractérisé en ce que** dans l'étape b), on réticule la première couche (22) aussi fort pour qu'elle ne fasse preuve d'aucune adhérence et soit enroulable.

9. Procédé selon au moins l'une quelconque des revendications 1 à 8, **caractérisé en ce que** la deuxième couche (24) n'est réticulée dans l'étape d) que de manière suffisamment incomplète pour qu'elle ne fasse preuve d'aucune adhérence et soit enroulable.

10. Procédé selon au moins l'une quelconque des revendications 1 à 9, **caractérisé en ce que** la réticulation incomplète de la première (22) et/ou de la deuxième couche (24) est obtenue par réticulation à basse température.

11. Procédé selon la revendication 10, **caractérisé en ce qu'**on réalise la réticulation incomplète à une température de 30 °C ou inférieure.

12. Procédé selon au moins l'une quelconque des revendications 1 à 11, **caractérisé en ce qu'**on réticule complètement la première (22) et/ou la deuxième couche (24) dans une étape de procédé e) ultérieure.

13. Procédé selon la revendication 12, **caractérisé en ce qu'**on obtient la réticulation complète de la première (22) et/ou de la deuxième couche (24) à température élevée.

14. Procédé selon au moins l'une quelconque des revendications 1 à 13, **caractérisé en ce que** dans l'étape a), on applique d'abord une couche supplémentaire (42) en une matière cristalline liquide sur le support, on réticule complètement l'au moins une couche supplémentaire (42) et on applique ensuite la première couche (22) sur l'au moins une couche supplémentaire complètement réticulée.

15. Procédé selon la revendication 14, **caractérisé en ce qu'**en tant qu'au moins une couche supplémentaire (42), on applique une couche en une matière cristalline liquide nématique.

16. Procédé selon la revendication 14 ou la revendication 15, **caractérisé en ce qu'**on applique l'au moins une couche supplémentaire (42) sous la forme d'un deuxième motif.

17. Procédé selon au moins l'une quelconque des revendications 1 à 16, **caractérisé en ce qu'**on ne réticule qu'incomplètement la deuxième couche (24) dans l'étape d), on applique sur la deuxième couche (24) au moins par zones un produit d'extraction, notamment un vernis contenant du solvant et après l'application du produit d'extraction, on réticule complètement la deuxième couche (24).

18. Procédé selon la revendication 17, **caractérisé en ce qu'**on applique le produit d'extraction à pleine surface sur la deuxième couche.

19. Procédé selon la revendication 17, **caractérisé en ce qu'**on applique le produit d'extraction sur la deuxième couche (24) sous la forme d'un troisième motif.

20. Procédé selon au moins l'une quelconque des revendications 1 à 19, **caractérisé en ce qu'**on procède à une réticulation incomplète des couches par exposition à un rayonnement UV à basse température, notamment à une température inférieure à 30 °C.

21. Procédé selon au moins l'une quelconque des revendications 1 à 20, **caractérisé en ce qu'**on procède à une réticulation complète des couches par exposition à un rayonnement UV à température élevée, notamment à une température supérieure à 30 °C.

22. Procédé selon au moins l'une quelconque des revendications 1 à 21, **caractérisé en ce qu'**on procède à l'exposition au rayonnement UV pour la réticulation dans une atmosphère sous gaz inerte, notamment une atmosphère sous argon, sous azote ou sous dioxyde de carbone.

23. Procédé selon au moins l'une quelconque des revendications 1 à 22, **caractérisé en ce qu'**on imprime les couches cristallines liquides par héliogravure, sérigraphie, flexographie, enduction à la racle ou par enduction au rideau.

24. Procédé selon au moins l'une quelconque des revendications 1 à 23, **caractérisé en ce qu'**on applique sur la deuxième couche (24) une ou plusieurs couches supplémentaires, qui servent à protéger l'élément de sécurité ou l'une de ses couches partielles, à améliorer l'adhérence de couches individuelles ou à augmenter encore le caractère infalsifiable.

25. Procédé selon au moins l'une quelconque des revendications 1 à 24, **caractérisé en ce qu'**après réticulation complète, on transfère la séquence de couches sur un substrat cible, notamment sur une structure de fil de sécurité.

26. Procédé selon la revendication 25, **caractérisé en ce que** le substrat cible comporte un revêtement foncé, notamment noir.

27. Procédé selon au moins l'une quelconque des revendications 1 à 26, **caractérisé en ce qu'**on munit par ailleurs l'élément de sécurité avec une ou plusieurs couche(s) fonctionnelle(s), notamment avec des couches présentant des caractéristiques de sécurité visibles à l'oeil nu ou détectables par machines.

28. Procédé selon la revendication 27, **caractérisé en ce qu'**on forme les couches fonctionnelles par des couches réfléchissantes, hautement réfractives, changeant de couleur, polarisantes, déphaseuses, à pleine surface ou à surface partielle, des couches conductrices opaques ou transparentes, des couches magnétiques douces ou dures et/ou des couches fluorescentes ou phosphorescentes.

29. Élément de sécurité, avec une couche de motif changeant de couleur pour des papiers de sécurité, des documents de valeur et similaires, avec une première couche (22) en un matière cristalline liquide non chirale et une couche à motif (24) changeant de couleur, en une matière cristalline liquide chirale, appliquée sur la première couche (22), susceptible d'être fabriqué selon l'une quelconque des revendications 1 à 28, sur lequel la couche à motif (24) changeant de couleur comporte au moins deux zones à motif (26, 28) avec différents effets de changement de couleur, la première couche (22) est appliquée sous la forme du motif souhaité et la couche à motif (24) changeant de couleur est appliquée à pleine surface.

30. Papier de sécurité destiné à la fabrication de documents de valeur ou similaires, avec un élément de sécurité (12) selon la revendication 29 ou un élément de sécurité susceptible d'être fabriqué selon l'une quelconque des revendications 1 à 28.

31. Document de valeur (10), telle que billet de banque, carte d'identité ou similaires, avec un élément de sécurité (12) selon la revendication 29 ou un élément de sécurité susceptible d'être fabriqué selon l'une quelconque des revendications 1 à 28.
